(19) Europäisches Patentamt

European Patent Office

Office européen des brevets

(11) **EP 0 915 732 B1**

(12) **EUROPEAN PATENT SPECIFICATION**

(45) Date of publication and mention
of the grant of the patent:
**19.03.2003  Bulletin 2003/12**

(51) Int Cl.7: **B01D 53/64**, B01D 53/78,
B01D 53/96

(21) Application number: **98924715.0**

(22) Date of filing: **22.05.1998**

(86) International application number:
**PCT/SE98/00960**

(87) International publication number:
**WO 98/053900 (03.12.1998 Gazette 1998/48)**

(54) **A METHOD AND APPARATUS FOR REMOVING GASEOUS ELEMENTARY MERCURY FROM A GAS**

METHODE UND VORRICHTUNG ZUR ENTFERNUNG VON GASFÖRMIGEM ELEMENTAREN QUECKSILBER AUS EINEM GAS

PROCEDE ET APPAREIL PERMETTANT DE SEPARER LE MERCURE ELEMENTAIRE GAZEUX D'UN GAZ

(84) Designated Contracting States:
**BE DE ES FI FR GB IT NL SE**
Designated Extension States:
**RO**

(30) Priority: **26.05.1997  SE 9701947**

(43) Date of publication of application:
**19.05.1999  Bulletin 1999/20**

(73) Proprietor: **BOLIDEN CONTECH AB**
**S-100 31 Stockholm (SE)**

(72) Inventor: **ALLGULIN, Torkel**
**S-253 67 Helsingborg (SE)**

(74) Representative: **Lundin, Björn-Eric**
**Boliden Mineral AB,**
**Patent & Trade Marks,**
**P.O. Box 5001**
**194 61 Upplands Väsby (SE)**

(56) References cited:
**EP-A- 0 179 040**          **EP-A- 0 235 414**
**WO-A-96/16721**          **WO-A-97/24172**
**WO-A-97/34683**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method and an apparatus for removing gaseous elementary mercury from a gas, in which the gas is treated in a washing plant with a washing liquid that is circulated in a closed system and that includes 0.01-300 mmol/l mercury (II) ions and at least twice this amount of chloride ions that are capable of forming complexes with mercury (II) ions, and in which method the elementary mercury contained in the gas is oxidised and solid mercury (I) chloride is formed. The method is particularly suited for removing mercury from gases that are generated when roasting mercury-containing sulphide ores. However, the method can also be used advantageously for eliminating mercury from other gases that have lower sulphur dioxide contents or contain no sulphur dioxide at all.

The majority of countries have extremely stringent requirements with regard to the emission of mercury from industrial processes. Gases that contain elementary mercury have constituted one of the greatest sources of the emission of industrial mercury to the environment, and many new gas cleaning processes have been proposed during the last twenty-five years for eliminating the elementary mercury from such gases. However, the majority of these proposed gas cleaning processes, and particularly those that are most efficient, are technically much too complicated and require the use of expensive, special apparatus or sophisticated reactants and additives in order to be able to achieve a satisfactory result. One of the few processes that has won wide use in practice and that also belongs to the most effective processes and has therefore dominated the market at least with regard to its application in the metallurgical field is the so-called "Boliden-Norzink Process", also referred to as the "chloride process". The process, of which various embodiments are described in more detail in US-A 3,849,537, US-A 4,233,274 and US-A 4,640,751, is carried out in a washing plant that includes a separate absorption tower in which a washing solution, which in addition to its mercury (II) chloride content will also contain any sulphur dioxide extracted from the gas, and extracted and separated mercury in the form of solid mercury (I) chloride (calomel $Hg_2Cl_2$), is sprayed through nozzles over packing bodies and the solution thereafter collected at the bottom of the tower. The mercury vapour, i.e. elementary mercury $Hg^0$, present in the gas is oxidised quickly and effectively in the absorption tower with the aid of the mercury (II) chloride in the wash solution, to form solid mercury (I) chloride. The wash solution leaving the absorbtion tower is caused to circulate in an essentially closed system from which a sub-flow is withdrawn and freed from precipitated calomel and, subsequent to being subjected to a necessary purification process, part of this sub-flow is released to a recipient. The washing-solution sub-flow to be freed from calomel is passed to a sedimentation tank or the like for physical separation of solid calomel extracted in the form of a sludge, sometimes also called slurry, and is passed to a sludge silo and from there to a regenerating plant at different intervals when required, in which calomel is oxidised to mercury (II) chloride with chlorine gas. The resultant mercury (II) chloride is transferred to the closed main washing liquid system so as to maintain the mercury (II) content of the circulating washing liquid within a predetermined range. The mercury (II) content in the washing liquid is continuously consumed in accordance with the reaction

$$Hg^0 + HgCl_2 \rightarrow Hg_2Cl_2 \text{ (calomel)}$$

Thus, the consumption of mercury (II) in the washing liquid will increase with increasing mercury contents of the gas. Consequently, the mercury (II) content of the gas will fall relatively quickly when the mercury content of the gas varies to any great extent, meaning that additional mercury (II) chloride must be added to the system as quickly as possible. It will be seen that this make-up of the washing liquid constitutes a very essential feature of this process. If the content of mercury (II) ions of the washing liquid falls rapidly due to temporary high contents of $Hg^0$ in the gas, it may be difficult to constantly maintain the process at optimal conditions with regard to efficiency and the degree of cleanliness desired.

The oxidation of calomel results in problems that are associated with the occurrence of dissolved sulphur dioxide in the washing liquid among other things, since sulphur dioxide is oxidised by chlorine resulting in the additional consumption of chlorine on the one hand, and forms on the other hand sulphuric acid and hydrochloric acid, which can only be accepted in the washing liquid in limited concentrations. Consequently, the oxidation of calomel with chlorine has hitherto been carried out in a circuit that is generally separated from the main washing liquid circuit and, as earlier indicated, has therefore been carried out in periodically campaigns. Even though the amounts of calomel sludge treated in the oxidisation process are relatively moderate, this oxidation process has nevertheless hitherto presented several drawbacks with respect to the "chloride process". The losses of mercury (II) chloride that occur have been found to depend partially on the total amount of liquid in the system and on the mercury (II) chloride content of the liquid. Admittedly, this chloride content can, as a rule, be maintained within predetermined limits by the intermittent supply of mercury (II) ions formed by the oxidation process, optionally in combination with an external supply of mercury (II) chloride. However, in view of the increasing demands on the effectiveness and efficiency of the gas purification process, it would be more beneficial if the mercury (II) ion content of the circulating washing liquid could be maintained more uniformly within closer limits so that time-wise variations in the mercury (II) ion content can be kept as small as possible and preferably independent of any variations in the mercury content of the incoming gas. to the best possible extent. Thus, if it were possible to control the average content of mercury (II) ions in the washing liquid more quickly and more effectively without needing to introduce external mercury (II) chloride manually to the system or needing to use a separate buffer volume of oxidised calomel, the total process would provide considerable technical advantages over the earlier known chloride process.

The document EP-A-0 175 040 describes a process for removal of mercury from flue gas, comprising the oxidation of $Hg_2Cl_2$ with $Cl_2$ followed by electrolysis of $HgCl_2$.

Taken as a whole, it will be seen that if it were possible to improve the oxidation of calomel while taking into account the current requirement of mercury (II) ions in the washing liquid, the entire "chloride process" would become more beneficial by virtue of more uniform and more effective removal of mercury from the gas, even with respect to temporary variations of the mercury content of the incoming gas As before mentioned, one of the most serious problems in this regard is the presence of sulphur dioxide in the washing liquid, which because it reacts with the

oxidation agent chlorine to form hydrochloric acid and sulphur dioxide, which in turn forms sulphuric acid, makes oxidation of calomel to mercury (II) chloride difficult to achieve. The washing liquid also becomes more and more acid as a result of the formation of hydrochloric acid and sulphuric acid, and must therefore be neutralised, at least before being released to a recipient. The presence of mercury compounds also complicates the situation, because it is not always possible to exclude the formation of complex chlorine and sulphur compounds, which, of course, further disturbs the process. If it were possible to carry out the oxidation process so as to at least essentially eliminate the aforesaid problems, the chloride process could be improved (despite being twenty-five years old) in many important respects and therewith still be able to compete with the most advanced and most modern processes for treating mercury-containing gases, for many years to come.

The object of the present invention is to provide an improved "chloride process" which eliminates essentially all of the problems and drawbacks discussed in the foregoing and which is able to meet any future industrial requirements with respect to improved process control and simplified process operation and apparatus without adding any costs. The invention is characterized to this end by the process steps and apparatus features set forth in the following Claims. Thus, in accordance with the invention, solid mercury (I) chloride formed from oxidation of elementary mercury in the gas is brought to move into a reaction unit for the oxidation of mercury (I) chloride. The chlorine required for this oxidation process and liquid for taking-up mercury (II) ions formed by said oxidation process are caused to pass upwards through a reaction zone in the lower part of the reaction unit. This zone is kept substantially filled with solid mercury (I) chloride and the amount of chlorine added is adapted so that essentially all chlorine will be consumed during its passage upwards through the reaction zone. The liquid containing the thus formed mercury (II) ions is then united with the washing liquid present above the reaction zone, and the so united washing liquid with its increased mercury (II) content is then brought to the closed circulating system to be recycled to the washing tower as a compensation for the mercury (II) ion content consumed for the oxidation of elementary mercury.

Said formed mercury (I) chloride may be brought to the reaction unit using two in principle different ways, either being transported by the washing liquid or, in those cases the reaction unit is directly connected to the lower part or bottom of the washing tower, by means of the gravity forces action or in other word by sedimentation

Chlorine and liquid are delivered to the reaction unit either from the bottom or from the top of said unit, through pipes and/or hoses that discharge close to the bottom of the reaction zone. The calomel content of the reaction unit is monitored essentially continuously, so as to enable the process to be controlled. This enables the supply of washing liquid to the reaction unit to be readily controlled on the basis of the variation of calomel content, which can be achieved by observing changes in weight of the reaction unit, although other methods that can be readily achieved in practice are also possible, for instance by optically reading the height of the calomel column. The amount of chlorine added to the system per unit of time can be controlled with respect to the mercury (II) ion content of the washing liquid in the closed circulating system. The oxidation process in the reaction unit is ideally carried out essentially continuously, although it is also possible to interrupt the oxidation process for short periods of time in which the liquid may be subjected to some other treatment process, for instance a reduction process. In this latter case, part of the washing liquid is removed from the liquid circulating system for the reduction of mercury (II) ions with a reduction agent so as to form mercury (I) chloride (calomel) which is extracted, wherewith washing liquid can be separated as a purified bleed subsequent to possible further washing stages.

The reaction unit may consist in a single vessel or in two separate vessels, in which latter case the upper part of the bottom vessel will be connected to the bottom part of the top vessel, preferably by a generally vertical pipe or hose connection. The top reaction vessel may be a hydrocyclone or some similar effective de-watering apparatus, so as to favour sedimentation. The reaction unit may also as indicated hereabove preferably be connected directly underneath the washing tower and, thus, with regard to the apparatus be built up with the latter, where also the bottom of the washing tower may be provided and shaped for facilitating and effecting sedimentation partly already above the reaction unit entrance and also for facilitating transport of sediment materials to the upper part of the reaction unit.

The invention is based, among other things, on two specific properties of formed mercury (I) chloride, one of which is that it has extremely good settling properties because of its particle form and very high density, and the other of which is that it is quickly oxidised by chlorine ($Cl_2$). These properties are utilised in combination effectively in accordance with the invention, which enables oxidation of calomel to be effected with chlorine essentially in the absence of those problems caused by the presence of sulphur dioxide in the washing liquid, as earlier mentioned. The oxidation process is thus carried out in a reaction unit whose lower part, called the reaction zone, is adapted to utilise the high density of calomel and also the relatively heavy liquid phase for expelling or displacing liquid from the calomel sludge. The upper part of the reaction unit may be constructed or adapted to favour sedimentation or other physical separation of calomel sludge from the washing liquid. A suitable reaction unit will therefore be relatively wide at the top and narrow downwardly, i.e. in the reaction zone, and may be comprised of two parts as before mentioned, these two parts together being referred to here as the reaction vessel. In those cases the reaction unit is directly connected to the bottom part of the washing tower the main part of the sedimentation will be effected above the reaction unit and, thus, the upper part of the reaction unit does not necessarily be wider at the top than at the bottom, so in those cases the entire reaction unit may have the same cross-section and the elongated shape.

Solid calomel particles in the washing liquid will by means of sedimentation settle successively in the upper part of the reaction unit and the calomel sludge formed will be "de-watered" or enriched progressively to greater extents as it passes down the reaction unit. The weight and the density of the calomel present in the reaction zone will "press" liquid from the calomel sludge and force the liquid up towards the top part of the reaction unit, so that essentially only calomel particles in the steady state of the process will be present in the reaction zone, except any external additions. The reaction zone will therewith constantly be kept full of solid mercury (I) chloride when the size of the reaction zone has been adapted for a normal washing liquid supply to the reaction unit.

Should the predetermined reaction zone in the reaction unit not be completely full of calomel for some reason or another, it may be necessary to add calomel from an external source. In operation chlorine gas and water or some other suitable liquid, for example washing liquid from the circulating closed system, are caused to pass the elongated reaction zone filled essentially only with calomel, from the bottom of said zone and upwards, wherewith calomel is oxidised in the reaction zone and the mercury (II) ions that are formed are taken up by the liquid and carried to the upper part of the reaction unit, where they are united with the washing liquid. It is necessary that the amount of chlorine gas introduced is adapted so that it will be consumed during its passage up through the calomel column in the reaction zone and so that no chlorine gas will reach and come into contact with the sulphur-dioxide containing washing liquid in the upper part of the reaction unit. Because the calomel present will be quickly oxidised by chlorine gas, the relative size of the reaction zone can be restricted to very reasonable proportions.

Depending on local requirements, the chlorine gas and the liquid may be delivered either from beneath, through an opening in the unit and into the reaction zone, or from above, with the aid of pipes or hoses that discharge close to the bottom of the reaction zone. By providing the reaction unit with a facility that enables the amount of calomel in the reaction zone to be monitored, for instance by monitoring the weight of the reaction unit and its calomel content, or in some other way, as before mentioned, it can be ensured that the reaction zone is constantly held substantially full of calomel, by adapting the sub-flow of washing liquid delivered to the reaction unit from the liquid circulation system. This can be achieved fully automatically in response to signals deriving from the aforesaid measurements of the amount of calomel in the reaction unit and with the aid of suitable automatically controlled valves.

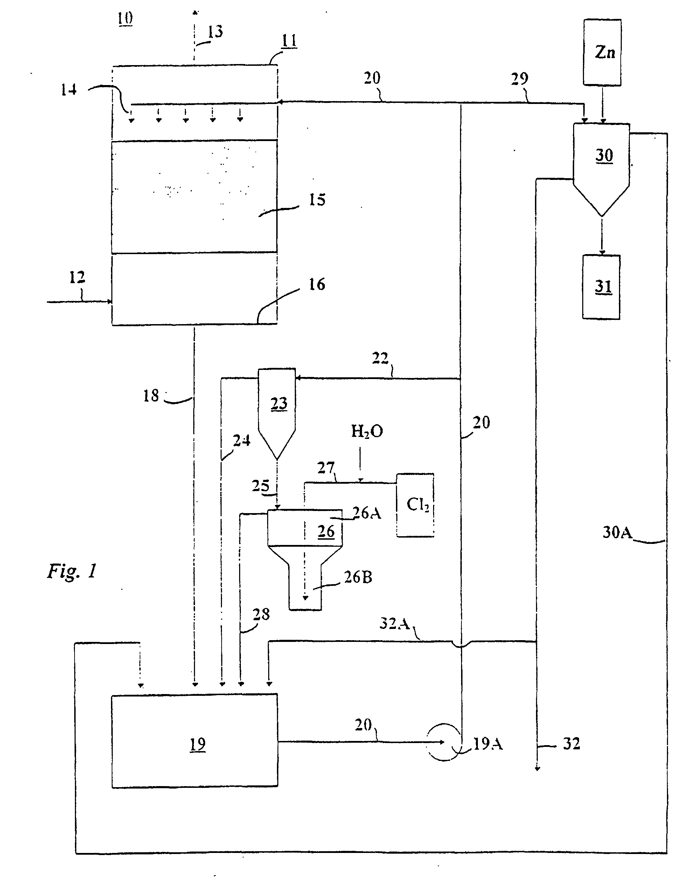

The invention will now be described in more detail with reference to preferred exemplifying embodiments thereof and also with reference to the accompanying drawing, where Figures 1-3 each illustrate a plant for carrying out the invention. Figure 1 shows a plant 10 for carrying out the invention. The illustrated plant includes an absorption tower 11 that has an inlet 12 for mercury-containing gas and an outlet 13 for treated mercury-free gas. Washing liquid is sprayed over packing bodies 15 in the absorption tower 11 through nozzles 14, and is collected on the bottom 16 of the tower. Although not shown, a droplet separator is provided in the upper part of the tower, so as to prevent liquid being entrained by the gas. Washing liquid is passed from the absorption tower 11 to a pump tank 19 through a conduit 18, and from the tank 19 through a pump 19A for recirculation to the absorption tower 11, via a conduit 20. A washing liquid sub-flow is taken from the conduit 20 and passed to a sludge separator 23 through a conduit 22. Sludge-free liquid is then passed from the upper part of the sludge separator 23 back to the pump tank 19, via a conduit 24. Washing liquid that contains calomel is passed from the lower part of the separator 23 through a conduit 25 to a reaction unit 26 in which the calomel is oxidised.

As illustrated, the reaction unit 26 may consist in a single vessel or in two vessels, in which latter case the bottom vessel is connected directly to the lower part of the top vessel, for instance by at least one generally vertical and straight pipe or hose connection. The bottom part of the single vessel or the bottom vessel of the two-vessel unit 26 forms a reaction zone 26B which is long and narrow in relation to the top part of the single vessel or the top vessel 26A. Chlorine gas and water or some other suitable transport liquid are delivered to the reaction zone 26B through a conduit 27 that opens out close to the bottom of the reaction zone 26B, and is forced to pass up through the reaction zone 26B. Mercury (II) ions formed by oxidation of calomel in the reaction zone 26B are transported up to the top part of the reaction unit or to the top vessel 26A by the delivered transport liquid, and are passed therefrom to the pump tank 19 together with liquid separated from the calomel sludge, via a conduit 28.

When wishing to withdraw calomel and/or purified bleed from the system, a washing liquid sub-flow is taken from the conduit 20 and passed through a conduit 29 to a reduction reactor 30 to which zinc powder is also delivered so as to reduce all mercury (II) ions present in the solution and therewith form a calomel precipitate which is separated into a collecting vessel 31 together with the calomel that is already present, whereas purified bleed may be further purified with respect to any other environmentally harmful components and then discharged from the system through a conduit 32, or returned to the pump tank 19 through a conduit 32A for the supply of clean liquid, if so desired. Subsequent to extracting calomel in the reactor 30, the washing liquid may optionally be returned from the reactor 30 to the pump tank 19 through a conduit 30A without first being purified.

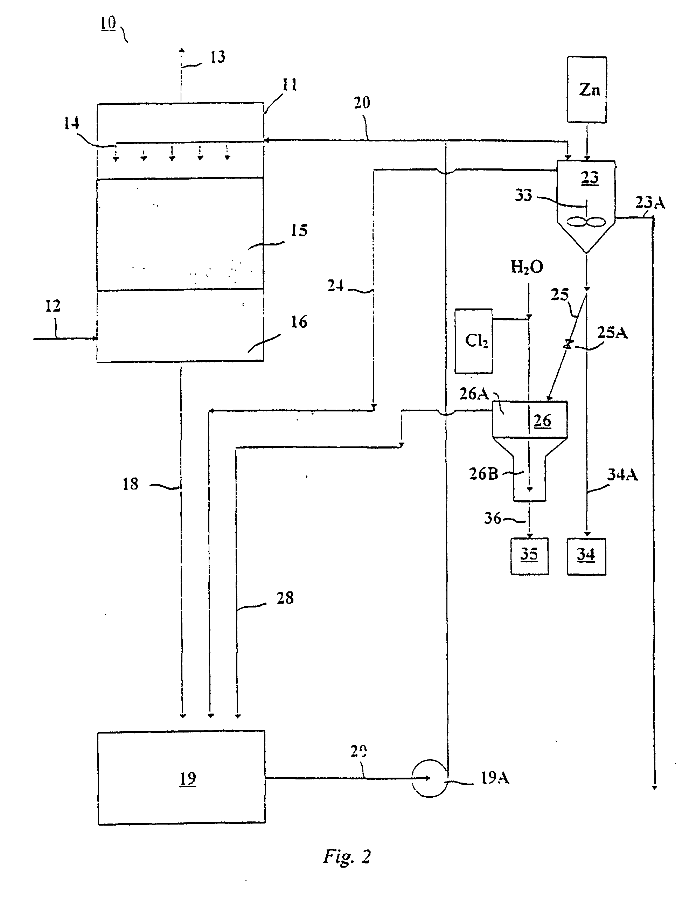

The plant illustrated in Figure 2 is similar to that illustrated in Figure 1 although in the Figure 2 embodiment the reduction of washing liquid with zinc is carried out intermittently in the sludge separator 23 in connection with the reaction unit 26. Purified bleed is taken from the separator 23 through a conduit 23A. The conduit 25 includes a valve 25A, suitably an on-off valve, which is used to close the conduit 25 when the need for cleansing is acute or when the reaction unit 26 contains an excessive amount of calomel, while stopping the supply of chlorine to the reaction zone 26B at the same time. The supply of zinc powder to the sludge separator 23 is commenced and a stirrer 23 is activated so as to accelerate the reduction reaction. The supply of zinc and the stirrer 23 are stopped after a predetermined period of time, whereafter the valve 25A is opened and the oxidation process continued by again supply chlorine to the reaction zone 26B. Calomel is withdrawn from the system to a container 34, via a conduit 34A. Alternatively, calomel can be taken out from the bottom part of the reaction zone 26B and passed to a container 35 through a conduit 36.

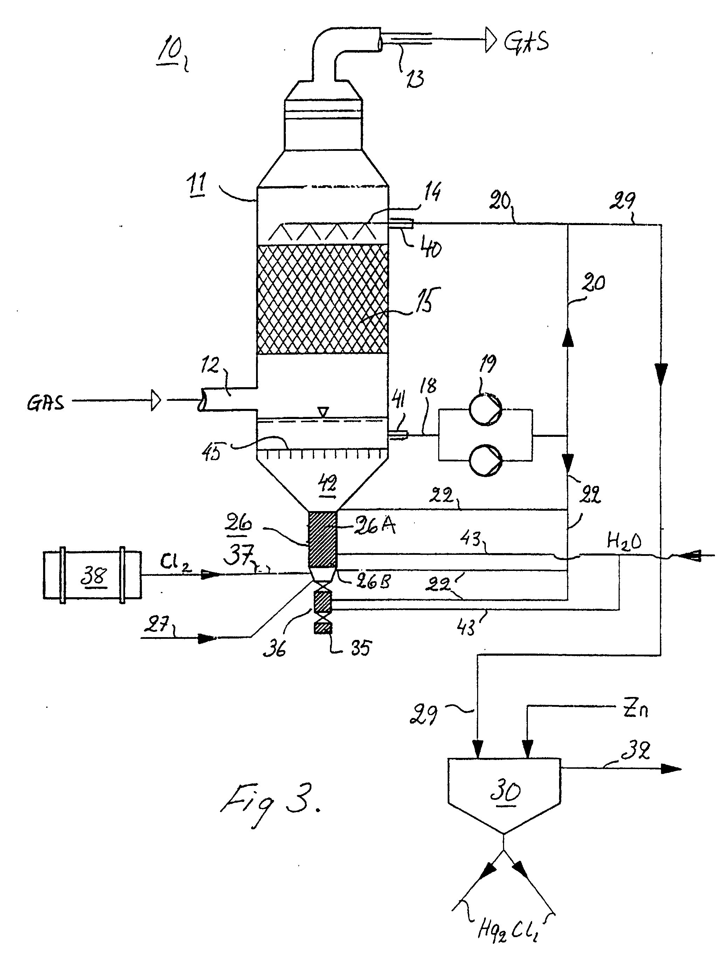

In figure 3 is shown schematically an apparatus according to Claims 8 and 9 in the form of a plant 10 and is illustrated a highly preferred embodiment of the invention. The plant 10 comprises an absorption tower 11 (washing tower) provided with an inlet 12 for mercury-containing gas and an outlet 13 for treated mercury-freed gas. The absorption tower 11 has nozzles 14 and packing bodies 15 provided above the level of the gas outlet 13. Connected to the lower part 42 of the absorption tower 11, which lower part 42 here is shown with a conical downwardly tapering shape, is the reaction unit 26, which has connections for conduits 22, 27 and 37 in its lower part and connection for conduit 43 for supply of water. Washing liquid withdrawn from the closed circuit system may be supplied to the lower part 42 of the washing tower 11 close to the reaction unit 26 and/or be supplied to the reaction unit upper part 26A close to the bottom part of the tower 11. Below the lower part of the reaction unit 26 there is a container 35 which via a conduit and/or container 36 is connected to the reaction unit 26. Washing liquid withdrawn from the closed circulating system may also be supplied to the container 36 for washing calomel and for absorption of any elementary mercury present in the container 36. In the lower part 42 of the tower 11 suitable means 45 are arranged, for example in the form of lamellas or the like, in order to prevent any horizontally liquid flow movement as well as any rotational flow. The chlorine supply conduit 37 is shown connected to a chlorine container 38.

In operation solid mercury (I) chloride (calomel) formed by oxidation of elementary mercury will follow the washing liquid in its circuit via the conduits 18,20 and the pumping means 19 back to the upper part of the tower 11, but a part of the formed calomel will by means of sedimentation be brought to move downwards through the washing liquid present in the lower part, which liquid is only slightly flowing upwards, and thus, the calomel will move towards and into the reaction unit 26. In the lower reaction unit 26 calomel will, as described in connection with Figure 1, be oxidized by the chlorine 37, which may be supplied together with compressed air 27. By means of the calomel oxidation in the lower reaction zone 26B there is formed mercury (II) ions which will follow the upwards moving liquid being displaced by the calomel and this may be facilitated by liquid supplied to the lower part 26B of the reaction unit 26. This liquid, which may be washing liquid recycled via conduit 22 and/or additional water supplied via conduit 43, will contribute to force the calomel upwardly through the reaction unit 26 and into the lower part 42 of the tower 11. In this lower part 42 the liquid with its mercury (II) content will meet and be mixed with the present only slightly upwardly flowing washing liquid, to which also additional washing liquid may be supplied from the closed system via conduit 22. The thus united and mixed washing liquid having an increased content of mercury (II) ions is brought via liquid outlet 41 and conduits 18,20 to be returned via liquid inlet 40 to the upper part of the absorption tower 11 and further to the nozzles 14 for renewed use as oxidation agent for elementary mercury in the incoming gas. Like the plant illustrated in Figure 1 a sub-stream of the washing liquid can when requested via a conduit 29 be withdrawn for the removal of calomel and/or purified bleed from the washing system and be reduced with zinc powder in the reduction reactor 30, wherein purified blend is withdrawn via conduit 32 and calomel via outlets in the bottom of reactor 30, from one of which outlets calomel may be recycled to the closed washing liquid system (18,20,14) and from the other outlet calomel may be withdrawn for sale or storing.

In summary, it will be observed that the invention provides a number of advantages over the known "chloride wash process", these advantages being beneficial to

- the surrounding environment
- the working environment
- plant and running costs
- process yields
- space requirements

since

1. no separate buffer volumes of calomel sludge or mercury (II) chloride solution is required and neither need the sludge or solution be treated separately;

2. the contents of the circulating washing liquid exiting from the absorption tower can be used to control the addition of chlorine to the system, so that a suitably adapted quantity of mercury (II) can be constantly met by the calomel oxidation integrated in the system;

3. mercury (II) chloride losses can be essentially reduced due to the fact that the total liquid volume in the system is smaller than was earlier the case;

4. peripheral equipment can be serviced more readily, because the equipment can be allowed to have smaller dimensions, therewith also reducing the maintenance costs;

5. peripheral equipment can be given smaller dimensions because

- the oxidation process is essentially continuous (does not rely on buffered supplies),
- the process stages and apparatus parts can be co-ordinated and combined to a greater extent than was earlier possible,
- the risk of oxidation of sulphur-dioxide containing washing liquid with subsequent process problems has probably been completely eliminated.

6. environmental problems can be avoided to a very large extent, because

- the process stages that require the handling of chlorine can be effected with such small dimensions as to enable these stages to be readily installed in close, isolated spaces and because of the absence of buffer vessels with associated conduit networks for handling calomel sludge and mercury (II) chloride solution.

## Claims

1. A method of removing gaseous elementary mercury from a gas that can be permitted to contain sulphur dioxide, in which method the gas is treated in a washing tower with washing liquid that circulates in a closed system and that contains 0.01-300 mmol/l mercury (II) ions and at least twice this amount of chloride ions, and in which the elementary mercury present in the gas is oxidised and solid mercury (I) chloride is formed, **characterized by** passing a part of said formed solid mercury (I) chloride to a reaction unit for oxidation to mercury (II) chloride; causing chlorine intended for said oxidation and liquid intended for taking-up mercury (II) ions formed by said oxidation process to pass up through a reaction zone in the bottom part of the reaction unit, said zone being kept substantially full of solid mercury (I) chloride; adapting said quantity of chlorine so that said chlorine will be essentially consumed during its passage up through the reaction zone; uniting the liquid and its content of formed mercury (II) ions with the washing liquid present above said reaction zone; and thereafter passing the so united washing liquid with its increased mercury (II) content to the closed circulating system to be recycled to said washing tower as a compensation for the mercury (II) ions consumed for the oxidation of elementary mercury.

2. A method according to Claim 1, **caracterized** by delivering chlorine and liquid to the reaction zone from beneath said zone.

3. A method according to Claim 1, **characterized by** delivering chlorine and liquid to the reaction zone from above said zone, through pipes and/or hoses that open out close to the bottom of said reaction zone.

4. A method according to Claims 1-3, **characterized by** monitoring the calomel content of the reaction unit essentially continuously.

5. A method according to Claims 1-4, **characterized by** controlling the amount of chlorine delivered per unit of time on the basis of the mercury (II) ion concentration in the washing liquidin the closed system.

6. A method according to Claims 1-5, **characterized by** effecting oxidation in the reaction unit essentially continuously.

7. A method according to Claims 1-6, **characterized by** taking from the liquid circulating system a sub-flow of washing liquid for the reduction of mercury (II) ions, preferably with zinc powder, such as to form mercury (I) chloride (calomel) which is separated from the system, wherewith a purified bleed can be taken out.

8. Apparatus for effecting the method according to preceding claims, **characterized in** a washing tower (11) and a reaction unit (26) having a smaller cross-section than the tower (11) connected to the bottom of the tower (11), the apparatus having conduits and means for maintaining a closed circuit system of washing liquid from a liquid outlet (41) in the lower part of the tower (11) to a liquid inlet (40) in the upper part of the tower (11), wherein the lower part (42) of the washing tower (11) below the level of the liquid outlet (41) has a tapering cross-section for adaptation to the reaction unit (26) and wherein the reaction unit (26) in its lower part (26B) is arranged for supplying oxidation agent and liquid.

9. Apparatus according to Claim 8, **characterized in that** the washing tower (11) below the level of the washing liquid outlet (41) has means (45) for preventing any horizontally or rotationally liquid flowing .

**Patentansprüche**

1. Verfahren zur Entfernung von gasförmigem elementarem Quecksilber aus einem Gas, welches erlaubtermaßen Schwefeldioxid enthalten kann, wobei man Gas in einem Waschturm mit Waschflüssigkeit behandelt, die in einem geschlossenen System zirkuliert und 0,01 bis 300 mmol/l Quecksilber (II)-Ionen und wenigstens zweimal diese Menge an Chloridionen enthält und worin das in dem Gas vorhandene elementare Quecksilber oxidiert und das feste Quecksilber (I)-chlorid gebildet wird, **dadurch gekennzeichnet, dass** man einen Teil des gebildeten festen Quecksilber (I)-chlorids zu einer Reaktionseinheit für eine Oxidation zu Quecksilber (II)-chlorid überführt, bewirkt, dass für diese Oxidation bestimmtes Chlor und für die Quecksilber (II)-Ionen bestimmte Flüssigkeit, die durch die Oxidation gebildet wurden, durch eine Reaktionszone im Bodenteil der Reaktionseinheit aufwärts gehen, wobei diese Zone im wesentlichen voll von festem Quecksilber (I)-chlorid gehalten wird, die Menge an Chlor so einstellt, dass das Chlor während seiner Passage aufwärts durch die Reaktionszone im wesentlichen verbraucht wird, Flüssigkeit und ihren Gehalt an gebildeten Quecksilber (II)-Ionen mit der Flüssigkeit, welche über der Reaktionszone vorliegt, vereinigt und danach die so vereinigte Waschflüssigkeit mit ihrem erhöhten Quecksilber (II)-Gehalt zu dem geschlossenen Zirkulationssystem überführt, um zu dem Waschturm als eine Kompensation für die für die Oxidation von elementarem Quecksilber verbrauchten Quecksilber (II)-Ionen rückgeführt zu werden.

2. Verfahren nach Anspruch 1, **dadurch gekennzeichnet, dass** man der Reaktionszone Chlor und Flüssigkeit von unterhalb dieser Zone zuführt.

3. Verfahren nach Anspruch 1, **dadurch gekennzeichnet, dass** man Chlor und Flüssigkeit der Reaktionszone von oberhalb dieser Zone aus durch Leitungen und/oder Schläuche zuführt, die nahe dem Boden dieser Reaktionszone münden.

4. Verfahren nach den Ansprüchen 1 bis 3, **dadurch gekennzeichnet, dass** man den Calomelgehalt der Reaktionseinheit im wesentlichen kontinuierlich überwacht.

5. Verfahren nach den Ansprüchen 1 bis 4, **dadurch gekennzeichnet, dass** man die je Zeiteinheit abgegebene Chlormenge auf der Basis der Quecksilber (II)-Ionenkonzentration in der Waschflüssigkeit in dem geschlossenen System steuert.

6. Verfahren nach den Ansprüchen 1 bis 5, **dadurch gekennzeichnet, dass** man eine Oxidation in der Reaktionseinheit im wesentlichen kontinuierlich bewirkt.

7. Verfahren nach den Ansprüchen 1 bis 6, **dadurch gekennzeichnet, dass** man von dem zirkulierenden Flüssigkeitssystem einen Unterstrom von Waschflüssigkeit für die Reduktion der Quecksilber (II)-Ionen, vorzugsweise mit Zinkpulver, wie zur Bildung von Quecksilber (I)-chlorid (Calomel) abnimmt, welches von dem System abgetrennt wird, womit eine gereinigte Teilmenge entnommen werden kann.

8. Vorrichtung zur Durchführung des Verfahrens nach den vorausgehenden Ansprüchen, **gekennzeichnet durch** einen Waschturm (11) und eine Reaktionseinheit (26) mit einem kleineren Querschnitt als dem des Turmes (11), verbunden mit dem Boden des Turmes (11), mit Leitungen und Einrichtungen zur Aufrechterhaltung eines geschlossenen Kreislaufsystems von Waschflüssigkeit von einem Flüssigkeitsauslaß (41) im unteren Teil des Turmes (11) zu einem Flüssigkeitseinlaß (40) in dem oberen Teil des Turmes (11), wobei der untere Teil (42) des Waschturmes (11) unter der Höhe des Flüssigkeitsauslasses (41) einen sich verjüngenden Querschnitt für eine Anpassung an die Reaktionseinheit (26) hat und worin die Reaktionseinheit (26) in seinem unteren Teil (26B) so angeordnet ist, dass sie Oxidationsmittel und Flüssigkeit zuführt.

**9.** Vorrichtung nach Anspruch 8, **dadurch gekennzeichnet, dass** der Waschturm (11) unter der Höhe des Waschflüssigkeitsauslasses (41) Mittel 45 zur Verhinderung eines horizontalen oder rotierenden Flüssigkeitsflusses hat.

## Revendications

**1.** Méthode permettant de séparer le mercure élémentaire gazeux d'un gaz qui peut contenir du dioxyde de soufre, moyennant laquelle le gaz est traité dans une tour de lavage avec un liquide de lavage qui circule dans un système fermé et qui contient de 0,01 à 300 mmol/l d'ions de mercure (II) et une quantité deux fois plus importantes d'ions de chlorure, et où le mercure élémentaire présent dans le gaz est oxydé et où se forme le chlorure de mercure solide (I), **caractérisée par** l'introduction d'une partie dudit chlorure de mercure solide formé (I) dans une unité de réaction pour permettre l'oxydation jusqu'à obtenir du chlorure de mercure (II); laquelle produit du chlore destiné à ladite oxydation et un liquide destiné à capter les ions de mercure (II) formés par ledit procédé d'oxydation afin de traverser une zone de réaction dans la partie inférieure de l'unité de réaction, ladite zone étant remplie principalement de chlorure de mercure solide (I); laquelle adapte ladite quantité de chlore que ledit chlore soit essentiellement consommé pendant son passage à travers la zone de réaction; en combinant le liquide et son contenu d'ions de mercure formés (II) avec le liquide de lavage présent dans la partie supérieure de ladite zone de réaction; et par la suite en introduisant ledit liquide de lavage combiné avec son contenu de mercure amélioré (II) dans le système de circulation fermé afin d'être recyclé dans ladite tour de lavage comme compensation pour les ions de mercure (II) consommés par l'oxydation du mercure élémentaire.

**2.** Méthode selon la revendication 1, **caractérisée par** la conduite du chlore et du liquide jusqu'à la zone de réaction depuis la partie inférieure de cette zone.

**3.** Méthode selon la revendication 1, **caractérisée par** la conduite du chlore et du liquide jusqu'à la zone de réaction depuis la partie supérieure de cette zone, à travers des tubes et/ou tuyaux qui s'étendent près de la partie inférieure de la zone de réaction.

**4.** Méthode selon les revendications 1-3, **caractérisée en ce que** le contrôle du contenu de calomel de l'unité de réaction est effectué essentiellement de façon continue.

**5.** Méthode selon les revendications 1-4, **caractérisée par** le contrôle de la quantité de chlore délivrée par unité de temps basé sur la concentration des ions de mercure (II) dans le liquide de lavage dans le système fermé.

**6.** Méthode selon les revendications 1-5, **caractérisée en ce que** l'oxydation s'effectue dans l'unité de réaction principalement de façon continue.

**7.** Méthode selon les revendications 1-6, **caractérisée en ce qu'**un sous-flux de liquide de lavage est retiré du système de circulation du liquide pour la réduction des ions de mercure (II), préférablement avec de la poudre de zinc, afin de former du chlorure de mercure (I) (calomel) qui est séparé du système, grâce auquel un extrait purifié peut être obtenu.

**8.** Appareil pour la réalisation de la méthode selon les revendications précédentes, **caractérisé par** une tour de lavage (11) et une unité de réaction (26) laquelle a une coupe transversale plus petite que celle de la tour (11) connectée au fond de la tour (11) et ayant des conduits et des moyens pour maintenir le système de circuit fermé du liquide de lavage d'une sortie de liquide (41) dans la partie inférieure de la tour (11) jusqu'à une entrée de liquide (40) dans la partie supérieure de la tour (11), où la partie inférieure (42) de la tour de lavage (11) au dessous du niveau de la sortie de liquide (41) a une coupe transversale pointue pour permettre l'adaptation à l'unité de réaction (26) et où l'unité de réaction (26) dans sa partie inférieure (26B) est disposée pour fournir l'agent d'oxydation et le liquide.

**9.** Appareil selon la revendication 8, **caractérisé en ce que** la tour de lavage (11) au dessous du niveau de la sortie du liquide de lavage (41) possède des moyens (45) pour empêcher toute coulée horizontale ou circulaire du liquide.

*Fig. 1*

Fig. 2

Fig 3.